# EUROPEAN PATENT APPLICATION

(11) **EP 1 378 377 A2**
(43) Date of publication of application: **07.01.2004**
(21) Application number: 03394058.6
(22) Date of filing: 01.07.2003
(51) Int. Cl.: B60B 9/26

(54) **A lightweight resilient wheel**

(30) Priority: 01.07.2002 IE 20020540
(71) Applicant: TECHNOLOGY INVESTMENTS LIMITED, County Meath (IE)
(72) Inventor: Timoney, Eanna Pronsias, County Meath (IE); Timoney, Sean, Dublin 4 (IE)
(74) Representative: Schütte, Gearoid

(57) **Abstract**

A lightweight wheel (1) is constructed of titanium or a composite material such as carbon fibre reinforced nylon material. The wheel has a central hub (3) and a circular rim (2) which are interconnected by spring elements (4) such as may be formed by a looped spring band (43) having a number of radial loops (44) extending between the hub (3) and rim (2). A tyre strip (7) may be mounted around an outer circumferential face of the rim (2).

## Description

This invention relates to wheels, and in particular to lightweight wheels.

It is an object of the present invention to provide a relatively lightweight large diameter compliant vehicle wheel for improved off-road mobility and obstacle crossing performance. For soft ground it is advantageous to have low ground pressure. In a wheeled vehicle this is best achieved with a wide compliant wheel of large diameter. The compliance of the wheel is generally achieved by using a pneumatic tyre on a metal rim. When a relatively low inflation pressure is used, the tyre deflects at the ground contact point to give an enlarged contact patch and thus lower ground contact pressure.

Furthermore, a large wheel diameter is also advantageous for overcoming obstacles such as a vertical step. For example, if it is required that the vehicle be able to surmount a vertical step 1 metre in height, it is desirable that the wheel diameter be of the same order, i.e. approximately 1 metre in diameter.

Compliance in the wheel also helps to isolate the wheel from ground roughness. Additional compliance is desirable if a heavy mass such as an electric drive motor is located in the wheel hub, in order to reduce the affects of unsprung weight.

For a lightweight vehicle, pneumatic tyres for wide wheels of such large diameter are excessively heavy. It is an object of the present invention to overcome this problem.

The invention is particularly concerned with wheels of the type including a hub, a circular outer rim encircling the hub and spaced outwardly therefrom, said rim being concentric with the hub when the wheel is in an unloaded position, the rim being mounted on the hub by means of a number of spaced-apart resiliently deformable spring members which interconnect the hub and rim. Various wheels of this type are disclosed in the prior art patent specifications GB 2285777, GB 2059887, US 6286572, EP 1186444, US 4782875 and US 4026342.

### Statements of Invention

According to the invention there is provided a lightweight wheel including:
a central hub,
a circular outer flexible rim,
the hub and rim being interconnected by spring means mounted between the hub and the rim,
the hub, rim and spring means each being constructed of either titanium or a composite material.

In one embodiment the spring means is rigidly fixed to the hub and to the rim.

In another embodiment the spring means comprises an endless looped spring band extending about the hub between the hub and the rim.

In a further embodiment six radial loops are provided in the spring band.

In another embodiment a limit stop means is provided to limit inward flexing of the rim towards the hub.

In another embodiment the limit stop means comprises at least one stop element mounted on the hub having a circular outer peripheral edge for engagement with the rim to limit inward movement of the rim.

In another embodiment the limit stop means comprises a pair of spaced-apart substantially parallel stop discs mounted on the hub and projecting radially outwardly from the hub, an outer peripheral edge of each stop disc located spaced-apart radially inwardly from an inner face of the rim for engagement with the rim upon inward flexing of the rim by a preset distance.

In a further embodiment the rim comprises an endless band having an inner face and an outer face, the spring means being mounted between the inner circumferential face of the rim and an outer face of the hub which is cylindrical.

In another embodiment a tyre strip is mounted on the outer face of the rim.

In a further embodiment the tyre strip is formed from a thermoplastic elastomer.

In another embodiment the thermoplastic elastomer is built up in a number of layers and is adhesively secured or heat bonded to the outer face of the rim.

In another embodiment the rim is formed from carbon fibre reinforced nylon.

In another embodiment the rim is formed from carbon fibre reinforced polyamide 12.

In a further embodiment the rim is built up in a number of layers of material having a number of fibre directions.

In another embodiment twenty two layers are provided with six layers at 90 degrees and sixteen layers at 0 degrees.

In another embodiment the central hub is cylindrical, the hub being formed of an endless band of carbon reinforced polyamide 12 material, the hub having an outer circumferential face,
the rim being formed of an endless band of carbon reinforced polyamide 12 material having an inner circumferential face and an outer circumferential face,
the spring means comprising an endless spring band of carbon reinforced polyamide 12 material,
said spring band being looped to form a plurality of radial loops extending between the hub and the rim,
a pair of spaced-apart limit stop discs mounted on the hub and extending radially outwardly, said discs being coaxial with the hub, an outer circumferential edge of each disc located intermediate the outer face of the hub and the inner face of the rim,
a tyre strip of thermoplastic elastomer being mounted on the outer face of the rim.

In another embodiment an aligned pair of spaced-apart parallel circular rim elements are provided interconnected by the outer ends of the spring members which extend between said two rim elements.

In a further embodiment a number of circumferentially spaced-apart radial cleats extend between the rim elements. Advantageously the cleats provide for improved grip on soft ground.

In another embodiment a solid tyre is mounted about an exterior of the rim. The tyre may be provided with threads, ribs or projections thereon for improved grip.

The invention will be more clearly understood by the following description of some embodiments thereof given by way of example only, with reference to the accompanying drawings, in which;
Fig. 1 is a perspective view of a wheel according to the invention;
Fig. 2 is a perspective view of another wheel according to a second embodiment of the invention;
Fig. 3 is a perspective view of a wheel similar to that shown in Fig. 2;
Fig. 4 is a perspective view of a lightweight wheel according to another embodiment of the invention;
Fig. 5 is a perspective view of a lightweight wheel according to a further embodiment of the invention;
Fig. 6 is a perspective view of a lightweight wheel according to a still further embodiment of the invention;
Fig. 7 is another perspective view of the lightweight wheel shown in Fig. 6;
Fig. 8 is a diagrammatic elevational view of the wheel shown in Fig. 6 shown under loading;
Fig. 9 is a diagrammatic perspective view corresponding to Fig. 8 showing the wheel of Fig. 6 under loading;
Fig. 10 is a perspective view similar to Fig. 9 of the wheel of Fig. 6 shown in another position of use under loading conditions;
Fig. 11 is a diagrammatic elevational view of the wheel of Fig. 6 shown in a step-climbing configuration;
Fig. 12 is an elevational view of a lightweight wheel according to another embodiment of the invention;
Fig. 13 is an elevational view similar to Fig. 12 showing a lightweight wheel according to another embodiment of the inveniton;
Fig. 14 is a diagrammatic perspective view showing a lightweight wheel according to another embodiment of the invention;
Fig. 15 is a view similar to Fig. 14 showing another lightweight wheel;
Fig. 16 is a perspective view similar to Fig. 14 showing a further lightweight wheel;
Fig. 17 is a perspective view similar to Fig. 14 showing a still further lightweight wheel; and
Fig. 18 another perspective view of the lightweight wheel shown in Fig. 17.

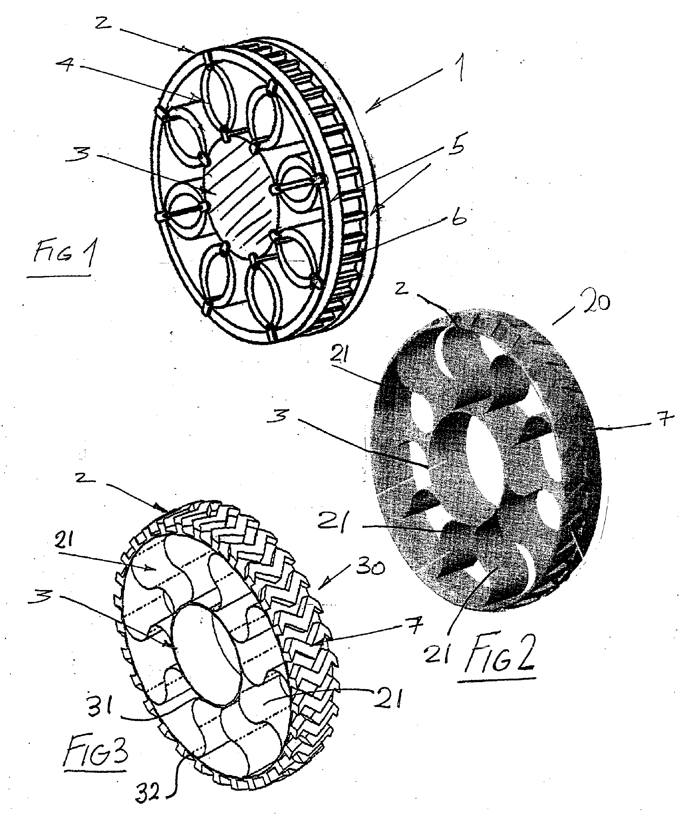

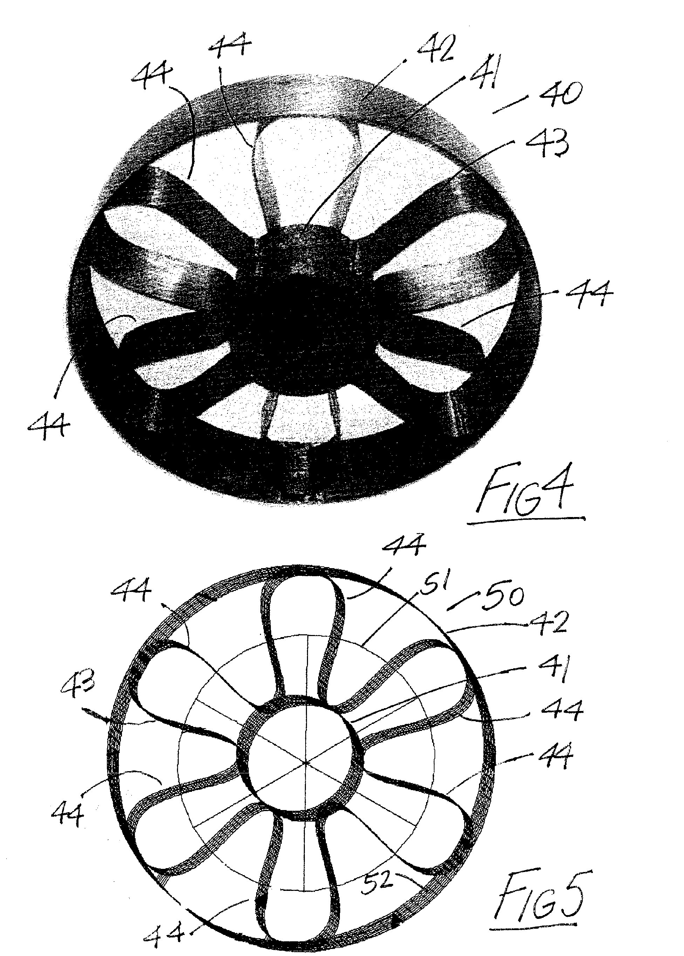

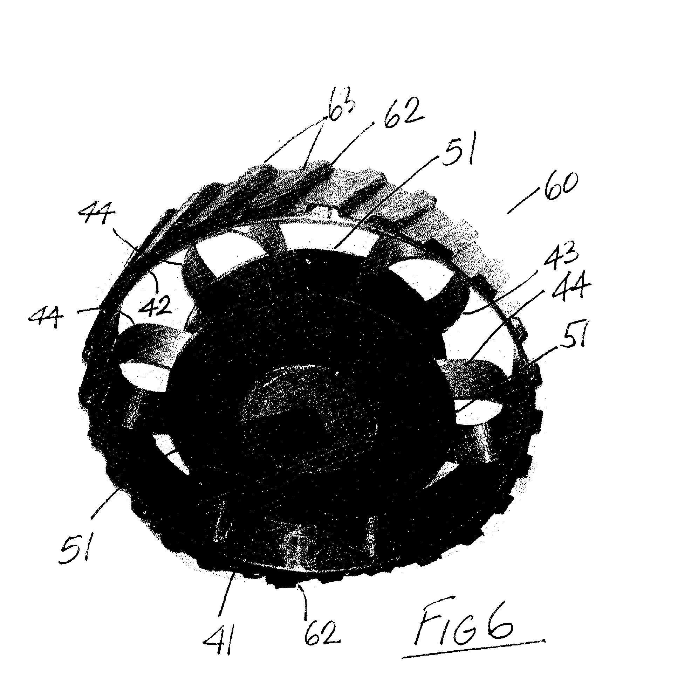

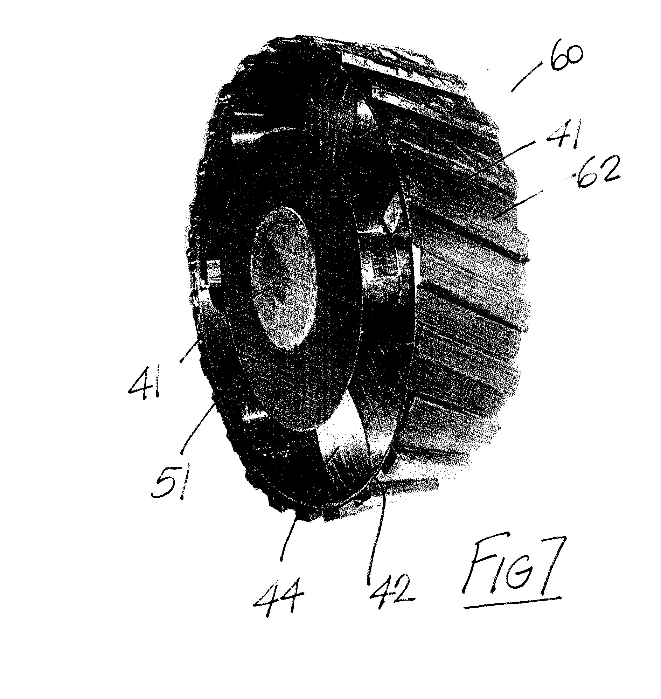

Referring to the drawings, and initially to Fig. 1 thereof there is illustrated a wheel indicated generally by the reference numeral 1. The wheel 1 has an outer rim 2 flexibly connected to a central hub 3 by means of lightweight composite springs 4, said composite being for example a carbon fibre reinforced nylon material.

The springs 4 comprise spring plates fixed to the rim 2 and to the hub 3. The hub 3 may contain a speed reduction gear unit and/or an electric motor and has means for connecting via a suspension mechanism with a vehicle chassis to which the wheel 1 is mounted in use.

The rim 2 is constructed from a flexible composite material such as carbon fibre reinforced nylon material and has twin rubber tyres 5 and a plurality of circumferentially spaced-apart radial cleats 6 which engage the ground and provide improved traction when the tyres 5 sink in soft ground. It will be understood that any other suitable material such as thermoplastic elastomer may be used for the tyres 5.

The hub 3 is also formed from a carbon fibre reinforced composite material.

Referring now to Fig. 2 there is shown another wheel according to a second embodiment of the invention indicated generally by the reference numeral 20. This is largely similar to the wheel described previously and like parts are assigned the same reference numerals. In this case a rubber strip 7 with a moulded-in tread is bonded to the composite rim 2 for improved grip. Further, the springs 21 interconnecting the rim 2 and hub 3 in this case are S-shaped lightweight composite springs.

It will be appreciated that within the scope of the invention many other variations in the construction of the springs, and the fixing of the springs to the rim and the hub are possible. Also, detailed design of the composite lay-up and construction of the springs and rim can provide desirable deflection characteristics for the wheel in response to the applied loads. It is also possible to incorporate some energy absorption or damping into the construction of the rim and the springs if desired.

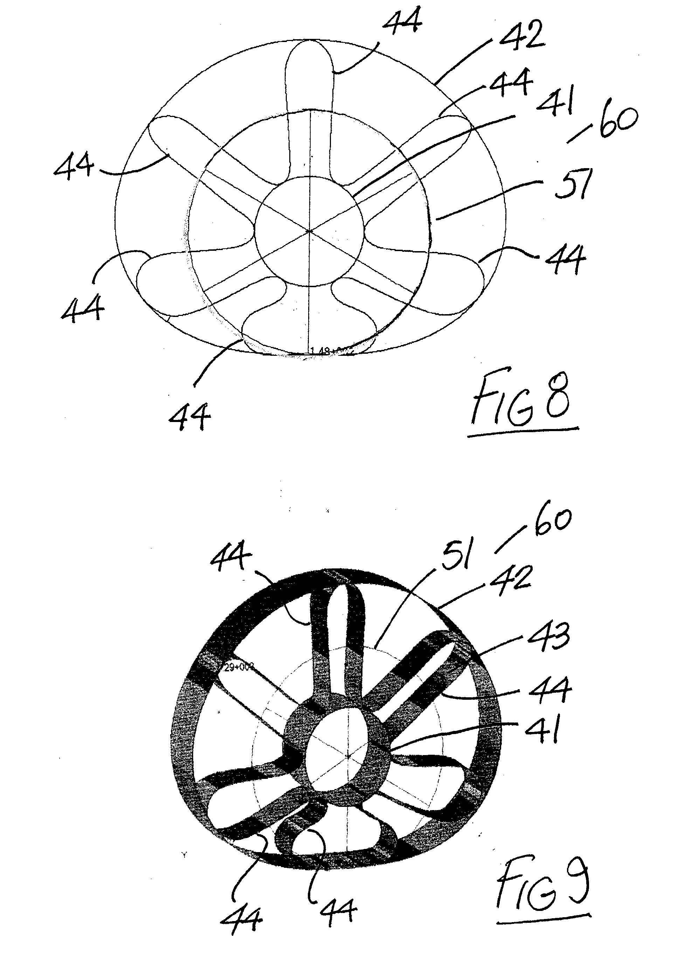

Referring to Fig. 3 there is shown another wheel according to a third embodiment of the invention indicated generally by the reference numeral 30. This is largely similar to the wheel shown in Fig. 2 and like parts are assigned the same reference numerals. The wheel 30 has a rim 2 connected to a hub 3 by means of a plurality of S-shaped springs 21. Each spring 21 has an inner end 31 attached to the hub 3 and an outer end 32 attached to the rim 3. In this case a different construction of rubber strip 7 with moulded-in tread is provided extending about an exterior of the rim 2.

As an alternative to the lightweight composite material some or all of the wheel components may be manufactured from titanium which would be particularly advantageous in many applications.

The ability of the wheel of the invention to flex is an important aspect of this invention. In this regard the wheel of the invention essentially replaces the pneumatic tyre in a conventional wheel.

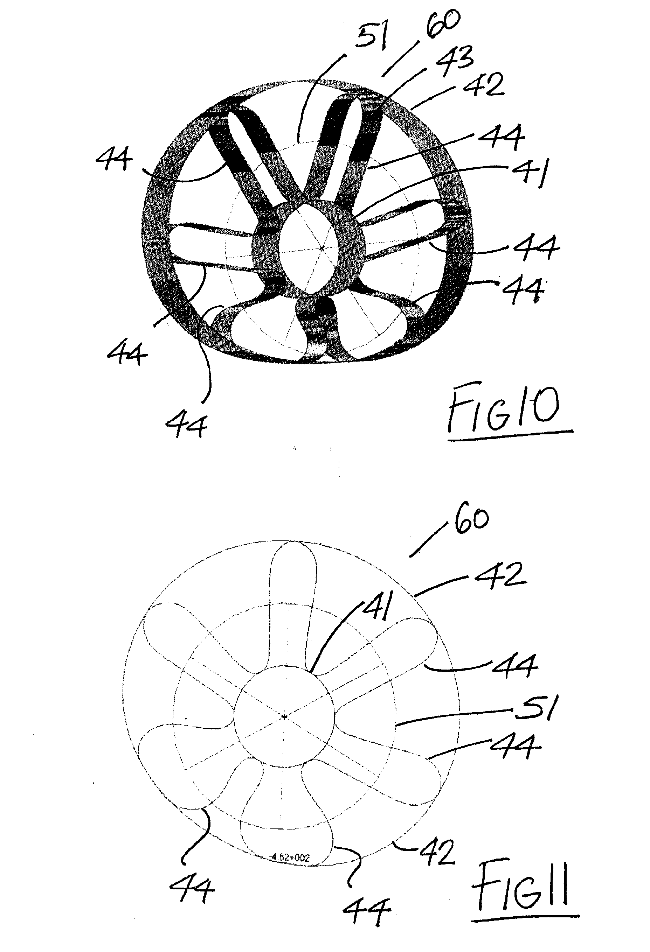

Referring now to Fig. 4 there is shown a lightweight wheel according to another embodiment of the invention indicated generally by the reference numeral 40. The wheel 40 is formed from a lightweight composite material, in this case carbon fibre reinforced polyamide 12 material. The wheel 40 has a cylindrical central hub 41. A circular outer flexible rim 42 is mounted on the hub 41 by an endless looped spring band 43 which extends about the hub 41 between the hub 41 and the rim 42. Six radial loops 44 are provided in the spring band 43. The spring band 43 is attached to the hub 41 and to the rim 42 by any suitable means such as soldering and/or mechanical fixing by means of bolts, rivets or more preferably clamps.

Referring now to Fig. 5 there is shown another lightweight wheel indicated generally by the reference numeral 50. The wheel 50 is largely similar to the wheel shown in Fig. 4 and like parts are assigned the same reference numerals. In this case the wheel 50 is additionally provided with a limit stop disc 51 mounted on the hub 41 co-axially with the hub 41 and projecting radially outwardly from the hub 41. An outer peripheral edge of the stop disc 51 is located spaced-apart radially inwardly from an inner face 52 of the rim 42 for engagement with the rim 42 upon inward flexing of the rim 42 by a preset distance.

Referring now to Figs. 6 to 11 there is illustrated another lightweight wheel indicated generally by the reference numeral 60. This is largely similar to the lightweight wheels shown in Figs. 4 and 5 and like parts are assigned the same reference numerals. In this case, a pair of spaced-apart substantially parallel stop discs 51 are provided, mounted at each side of the hub 41. Also, a tyre strip 62 of thermoplastic elastomer is mounted on an outer face of the rim 42. A number of spaced-apart ribs 63 are provided in the tyre strip 62 for improved grip.

In use, a number of the lightweight wheels 60 are mounted on a vehicle and the loops 44 of the spring band 43 compress under loading in use as shown in Figs. 8 to 11. As can be seen in Fig. 8 the lowermost spring loop 44 compresses and flattens out under loading and the lowermost portion of the rim 42 moves inwardly as it flattens under the load. It will be noted that the rim 42 can only move inwardly as far as the stop disc 51 which limits inward movement of the rim 42. For example for a wheel of rim diameter of 1 metre the rim 42 contacts the stop disc 51 after a deflection of about 150mm thus isolating further loads from the springs 44.

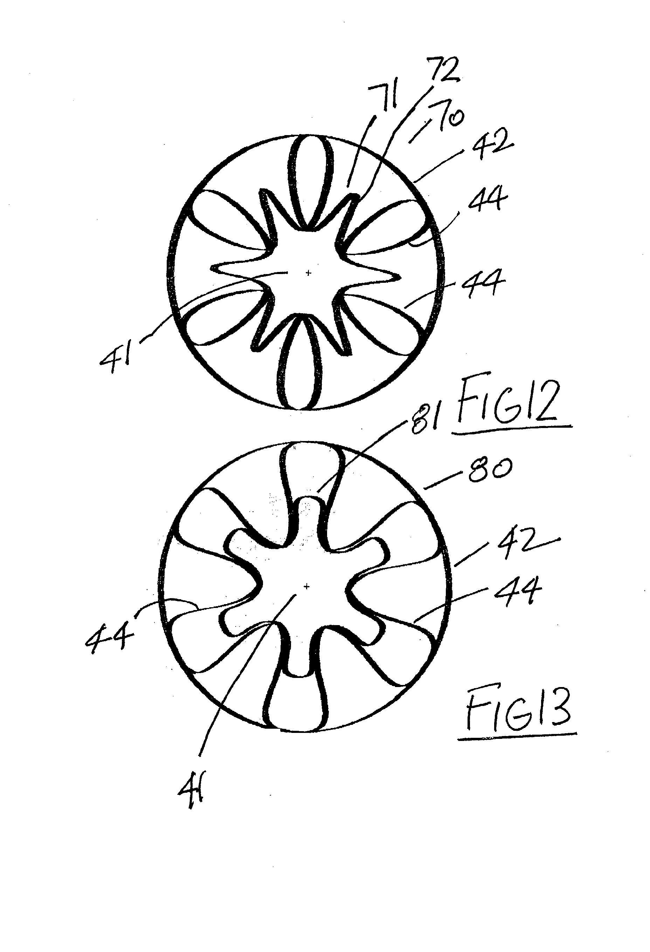

Figs. 8 and 9 show a load applied directly under a spring loop 44. Fig. 10 shows deformation of spring loops 44 when a load is applied between the spring loops 44. Fig. 11 shows deformation of spring loops 44 when the wheel 60 is climbing a step.

The lightweight wheel of the invention provides a significant weight saving over a conventional wheel. For example a lightweight wheel of the invention having a 1 metre diameter would weigh about 15kg as opposed to a conventional pneumatic tyre which would weigh in the order of 25-30kg. Thus for a 4-wheel vehicle the weight saving is in the order of 60-100kg.

### Example

For a lightweight wheel of the invention the hub, spring element and rim are constructed of carbon fibre reinforced polyamide 12 material.

### Rim

Thickness 6mm, circumference 3m and width 200mm. Formed in 22 layers - 6 layers at 90 degrees (axially) and 16 layers at 0 degrees (radially).

### Hub

Hub cylinder has thickness 5mm, outer diameter 300mm and width 200mm. Formed with 20% of layers at 90 degrees (axially) and 80% of layers at 0 degrees (radially).

### Springs

Thickness 1 mm, width 150mm, accumulative length 6m. Solder in place where they contact hub.

### Stop Disc

Thickness 3mm, diameter 400mm. Formed with 15 layers with equal variants of fibres at 0 degrees/+ 45 degrees/ - 45 degrees/ 90 degrees. Tabs may be added to aid bond to hub. Discs fit onto hub and fit into the 25mm available on each side of the springs.

### Tyre Strip

Thermoplastic elastomer in 15 layers adhesively secured to rim or heat bonded to rim.

It will be noted that any suitable method for attachment of the spring to the rim and to the hub may be employed such as bonding and/or mechanical fixing.

The materials of construction used have a iow youngs modulus, low density and high strength.

Referring now to Fig. 12 there is shown another lightweight wheel indicated generally by the reference numeral 70. In this case rim deflection limit stops 71 are integrally formed with the hub 41 forming a star shape with fingers 72 extending radially outwardly between the spring loops 44.

Referring to Fig. 13 there is shown another lightweight wheel 80. In this case an alternative arrangement of hub 41 with integral stop elements 81 is provided.

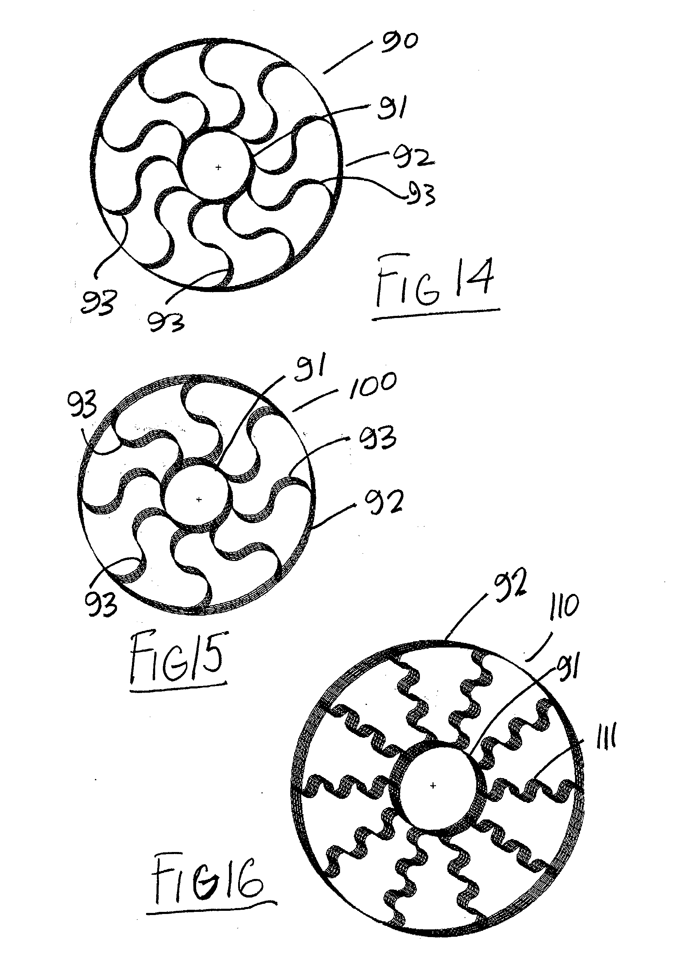

Referring now to Fig. 14 there is shown another lightweight wheel indicated generally by the reference numeral 90. The wheel 90 has a cylindrical hub 91 and a circular rim 92 interconnected by a plurality, in this case ten, S-shaped spring elements 93.

Referring now to Fig. 15 there is shown another lightweight wheel indicated generally by the reference numeral 100. This is essentially the same as the wheel 90 shown in Fig. 14 but in this case only eight spring elements 93 are provided.

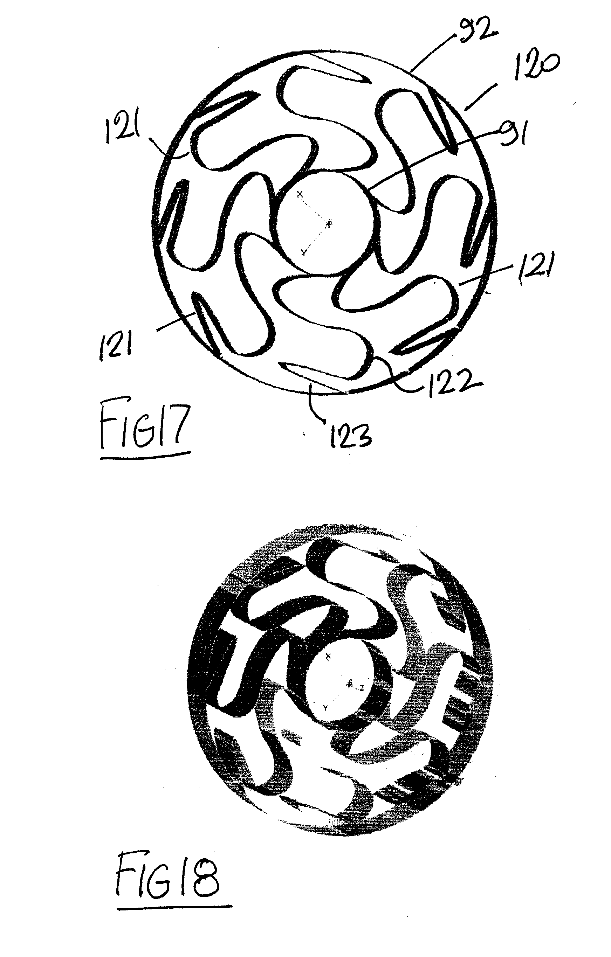

Referring now to Fig. 16 there is shown another lightweight wheel according to the invention indicated generally by the reference numeral 110. In this case the hub 91 and rim 92 are interconnected by multi-looped radial spring elements 111.

Referring now to Figs. 17 and 18 another lightweight wheel according to a further embodiment of the invention is shown, indicated generally by the reference numeral 120. In this case the hub 91 and rim 92 are interconnected by a plurality of 2-stage spring elements 121. Each spring element 121 has an inner S-shaped portion 122 attached to the hub 91 and an outer leaf spring portion 123 attached to the rim 92.

The invention is not limited to the embodiments hereinbefore described which may be varied in both construction and detail within the scope of the appended claims.

## Claims

1. A lightweight wheel including:
a central hub,
a circular outer flexible rim,
the hub and rim being interconnected by spring means mounted between the hub and the rim,
the hub, rim and spring means each being constructed of either titanium or a composite material.

2. A wheel as claimed in claim 1 wherein the spring means is rigidly fixed to the hub and to the rim.

3. A wheel as claimed in claim 1 wherein the spring means comprises an endless looped spring band extending about the hub between the hub and the rim.

4. A wheel as claimed in claim 3 wherein six radial loops are provided in the spring band.

5. A wheel as claimed in claim 1 wherein a limit stop means is provided to limit inward flexing of the rim towards the hub.

6. A wheel as claimed in claim 5 wherein the limit stop means comprises at least one stop element mounted on the hub having a circular outer peripheral edge for engagement with the rim to limit inward movement of the rim.

7. A wheel as claimed in claim 6 wherein the limit stop means comprises a pair of spaced-apart substantially parallel stop discs mounted on the hub and projecting radially outwardly from the hub, an outer peripheral edge of each stop disc located spaced-apart radially inwardly from an inner face of the rim for engagement with the rim upon inward flexing of the rim by a preset distance.

8. A wheel as claimed in claim 1 wherein the rim comprises an endless band having an inner face and an outer face, the spring means being mounted between the inner circumferential face of the rim and an outer face of the hub which is cylindrical.

9. A wheel as claimed in claim 8 wherein a tyre strip is mounted on the outer face of the rim.

10. A wheel as claimed in claim 9 wherein the tyre strip is formed from a thermoplastic elastomer.

11. A wheel as claimed in claim 10 wherein the thermoplastic elastomer is built up in a number of layers and is adhesively secured or heat bonded to the outer face of the rim.

12. A wheel as claimed in claim 1 wherein the rim is formed from carbon fibre reinforced nylon.

13. A wheel as claimed in claim 1 wherein the rim is formed from carbon fibre reinforced polyamide 12.

14. A wheel as claimed in claim 13 wherein the rim is built up in a number of layers of material having a number of fibre directions.

15. A wheel as claimed in claim 14 wherein twenty two layers are provided with six layers at 90 degrees and sixteen layers at 0 degrees.

16. A wheel as claimed in claim 1 wherein the central hub is cylindrical, the hub being formed of an endless band of carbon fibre reinforced polyamide 12 material, the hub having an outer circumferential face,
the rim being formed of an endless band of carbon fibre reinforced polyamide 12 material having an inner circumferential face and an outer circumferential face,
the spring means comprising an endless spring band of carbon reinforced polyamide 12 material,
said spring band being looped to form a plurality of radial loops extending between the hub and the rim,
a pair of spaced-apart limit stop discs mounted on the hub and extending radially outwardly, said discs being coaxial with the hub, an outer circumferential edge of each disc located intermediate the outer face of the hub and the inner face of the rim,
a tyre strip of thermoplastic elastomer being mounted on the outer face of the rim.
